(19) Europäisches Patentamt
European Patent Office
Office européen des brevets

(11) EP 1 059 484 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.05.2014 Patentblatt 2014/20**

(45) Hinweis auf die Patenterteilung:
**03.01.2007 Patentblatt 2007/01**

(21) Anmeldenummer: **99110142.9**

(22) Anmeldetag: **25.05.1999**

(51) Int Cl.:
***F21V 8/00*** ***(2006.01)***

(54) **Leuchte mit breitstrahlender Lichtstärkeverteilung**

Luminaire with wide beam light intensity distribution

Luminaire avec répartition de l'intensité lumineuse à faisceau large

(84) Benannte Vertragsstaaten:
**AT CH DE FR GB IT LI NL SE**
Benannte Erstreckungsstaaten:
**SI**

(43) Veröffentlichungstag der Anmeldung:
**13.12.2000 Patentblatt 2000/50**

(73) Patentinhaber: **Siteco Beleuchtungstechnik GmbH**
**83301 Traunreut (DE)**

(72) Erfinder:
• **Belloni, Paola**
**D-83278 Traunstein (DE)**
• **Leibig, Joachim**
**D-83374 Traunwalchen (DE)**
• **Prodell, Peter**
**D-83308 Trostberg (DE)**

(74) Vertreter: **Goddar, Heinz J.**
**Boehmert & Boehmert**
**Pettenkoferstrasse 20-22**
**80336 München (DE)**

(56) Entgegenhaltungen:
**EP-A- 0 819 970** **EP-A1- 0 819 970**
**EP-A1- 1 114 278** **EP-A2- 0 528 645**
**WO-A1-97/01726** **DE-A1- 2 459 327**
**DE-A1- 3 911 140** **DE-A1- 4 321 290**
**DE-A1- 19 652 209** **DE-T2- 3 689 668**
**DE-T2- 3 850 705** **DE-U1- 7 808 786**
**US-A- 3 721 818** **US-A- 3 866 036**
**US-A- 3 978 332** **US-A- 4 218 727**
**US-A- 5 040 883** **US-A- 5 079 680**
**US-A- 5 863 114** **US-A- 5 863 114**

• **Prospekt der Firma Zumtobel verteilt auf der Hannover Messe Industrie (19.04.1999 bis 24.04.1999)**

EP 1 059 484 B2

**Beschreibung**

Die Erfindung betrifft eine Leuchte, insbesondere eine Innenraumleuchte mit einer Lichtaustrittsfläche und einer oder mehreren Lampen (3; 101, 103), deren Licht zumindest teilweise über die besagte Lichtaustrittsfläche abgegeben wird, wobei für eine Ebene senkrecht zu der Lichtaustrittsfläche die Lichtstärkeverteilungskurve des über die Lichtaustrittsfläche abgegebenen Lichts ein oder mehrere voneinander getrennte Flügel aufweist, die jeweils im wesentlichen in einem Winkelbereich von 0° bis 90°, bezogen auf eine Achse senkrecht zur Lichtaustrittsfläche durch den Lichtschwerpunkt der Leuchte, liegen und die jeweils einen Spitzenbereich und daran beidseits anschließende Flankenbereiche, in denen die Lichtstärke auf einen deutlich geringeren Wert als in dem Spitzenbereich abfällt, aufweisen, wobei der Spitzenbereich bei Winkeln größer als 0° liegt und eine der Flanken zu dem Winkelbereich um 0° hin abfällt.

Leuchten mit einer derartigen Lichtabstrahlcharakteristik wurden bislang ausschließlich mit Hilfe von Spiegeln und lichtabschirmenden Elementen, wie Rastern, realisiert. Leuchten mit einem Hohllichtleiter waren zwar grundsätzlich bekannt, wurden jedoch bislang wegen ihrer aufwendigen Bauweise sowie der aufgrund von Mehrfachreflexionen entstehenden Lichtverluste nur selten zu Beleuchtungszwecken und überhaupt nicht für die Beleuchtung von Büroräumen oder dergleichen eingesetzt. Insbesondere war man bislang der Ansicht, daß man mit einer refraktiven Lichtauskopplung aus einem Hohllichtleiter die Lichtstärkeverteilungskurve hinsichtlich ihrer Form und Lage nicht in einem Maß beeinflussen könne, wie dies für viele lichttechnische Anwendungen erforderlich ist. Bisherige Hohllichtleiterleuchten hatten eine weitgehend direktstrahlende Lichtabstrahlcharakteristik, bei der Licht in einen großen Winkelbereich von ungefähr 120° oder mehr symmetrisch zur Vertikalen abgestrahlt wurde.

US-PS 5 863 114 beschreibt eine Hintergrundbeleuchtung für optische Anzeigen, insbesondere LCD-Anzeigen, mit einer oder mehreren Lampen und einem Hohllichtleiter, in den die Lampen Licht einstrahlen und der an einer von der Lichteintrittsseite verschiedenen Seite eine refraktive Lichtauskoppeleinrichtung aufweist, an der Licht aus dem Hohllichtleiter durch Lichtbrechung zu der Lichtaustrittsfläche ausgekoppelt wird.

Es ist die Aufgabe der Erfindung, eine alternative Möglichkeit zur Realisierung von Leuchten der eingangs genannten Art zur Verfügung zu stellen.

Erfindungsgemäß wird diese Aufgabe gelöst durch eine Leuchte nach Anspruch 1 oder 17.

Dabei soll unter einem "deutlich geringeren Wert", auf den die Flankenbereiche abfallen, ein Wert verstanden werden, der außerhalb des Bereiches der Schwankungen liegt, die in der Regel bei der Lichtstärkeverteilungskurve im Bereich eines Maximums auftreten. Mit anderen Worten kann der Spitzenbereich eine Reihe von kleinen Maxima aufweisen, welche Schwankungen um den mittleren Maximalwert entsprechen. Es kann vorgesehen sein, daß die reflektierenden Wände Licht zum Teil reflektieren und zum Teil durchlassen oder nur abschnittsweise reflektieren, solange sie Licht in irgendeiner Weise in den Hohlraum zurück reflektieren. Der Klarheit halber sei darauf hingewiesen, daß nicht alle Wände reflektierend sein müssen.

Insbesondere sieht die Erfindung vor, daß jeweils ein Maximum in einem Winkelbereich von 0° bis 90°, bezogen auf eine Achse senkrecht zu der Lichtaustrittsfläche durch den Lichtschwerpunkt der Leuchte liegt. Der Einfachheit halber wird in diesem Zusammenhang nicht zwischen positiven und negativen Winkeln unterschieden, z. B. ist mit einem Bereich von 40° bis 70° sowohl ein Bereich von +40° bis +70° als auch ein Bereich von - 40° bis - 70° gemeint.

Als refraktive Lichtauskoppeleinrichtung haben sich insbesondere Prismenstrukturen als geeignet herausgestellt. Beispielsweise können die aus der US-PS 5 396 350 und US-PS 5 555 109 bekannten Prismenstrukturen zur Lichtauskoppelung verwendet werden. Auf diese Druckschriften wird insoweit verwiesen. Bevorzugt sind jedoch lineare Prismenstrukturen, d.h. Prismenstrukturen, die entsprechend einem vorzugsweise kreuzungsfreien Linienmuster ausgebildet sind, wobei die Linie oder die Linien einen oder mehrere längliche Prismenabschnitte auf einander gegenüberliegenden Seiten begrenzen. Eine solche Struktur kann im einfachsten Fall durch mehrere parallele, vorzugsweise äquidistante Linien festgelegt sein. Sie kann jedoch auch z.B. durch eine einzige Linie, beispielsweise durch eine Spirallinie, festgelegt sein. Allen diesen Mustern ist gemeinsam, daß sich in jedem Schnitt entlang einer (nicht notwendig ebenen) Fläche senkrecht zu der oder den Linien des Linienmusters mehrere Schnittpunkte ergeben, wobei jeweils zwischen zwei Schnittpunkten ein Prismenabschnitt liegt. Es ist wichtig, daß die Breite der lichtbrechenden Prismen in der Richtung senkrecht zu den Linien kleiner als deren Länge in Richtung der Linien ist, z.B. mehr als das Dreifache, vorzugsweise mehr als das Zehnfache. Derartige längliche Strukturen lassen sich wesentlich einfacher herstellen als die bislang verwendeten pyramiden- oder gitterförmigen Strukturen, wie sie in den vorangehend genannten US-Patentschriften beschrieben sind. Sie haben weiterhin den Vorteil, daß die Fläche, durch welche Licht aus dem Hohllichtleiter ausgekoppelt werden kann, wesentlich größer ist, so daß die Auskoppeleffizienz verbessert wird.

Um die Lichtstärkeverteilungskurve in verschiedenen Richtungen zu gestalten, kann vorgesehen sein, daß in der Lichtauskoppeleinrichtung in dem Lichtweg zu der Lichtaustrittsfläche eine zweite lichtbrechende Struktur vorhanden ist, die ebenfalls entsprechend einem Linienmuster, wie vorangehend für die erste Struktur beschrieben, besteht, wobei die Linie oder Linien der zweiten Struktur in einer Projektion auf die Lichtaustrittsfläche die Linie oder Linien der ersten Struktur schneiden, so daß sich in der Projektion ein netzförmiges Muster ergibt. Vorzugsweise stehen die Linien der ersten und zweiten Struktur senkrecht aufeinander. Die Linien der ersten und/oder zweiten Struktur müßten nicht notwendigerweise gerade sein. Denkbar ist z.B. eine erste Struktur aus konzentrischen Kreisen und eine zweite Struktur mit sternförmig angeordneten Linien, die sich im Mittelpunkt der Kreise der anderen Struktur schneiden. Die erste und zweite Struktur können auch zwei gegenläufige Spiralen bilden.

Prismenstrukturen der vorangehend genannten Art können insbesondere zur Abschirmung des Lichts für bestimmte Winkelbereiche verwendet werden. Wenn die erste oder zweite Struktur an einer Grenzfläche zu Luft ausgebildet und die Prismen im Querschnitt im wesentlichen symmetrisch sind, gelten hinsichtlich des Prismenwinkels w und des Abschirmwinkels C die folgenden Relationen:

$$w/2 \leq C$$

$$w \geq 2\,(2\,\arcsin(1/n) + 90)/3$$

$$\tan(w/2) \leq (n\,\sin(\arcsin(1/n) - 3\,w/2) + \cos(w/2)) / (n\,\cos(\arcsin(1/n) - 3\,w/2) - \sin(w/2)),$$

wobei n der Brechungsindex des zweiten Mediums an der Grenzfläche und C der Abschirmwinkel der Lichtstärkeverteilung an der Grenzfläche ist.

Der Querschnitt der Prismen hat gemäß einer besonderen Ausführungsform die Form eines Polygonzugs. Vorzugsweise haben die Prismen einen dreieckigen Querschnitt. Sie können jedoch auch gekrümmte Seitenwände und/oder eine flache Stirnfläche anstelle einer scharfen Kante aufweisen.

Erfindungsgemäß können die erste und zweite Struktur an zwei einander gegenüberliegenden Seiten einer lichtbrechenden Platte ausgebildet sein.

Gemäß einer bevorzugten Ausführungsform der Erfindung ist vorgesehen, daß die Lichtauskoppeleinrichtung zwei einander gegenüberstehende plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche des zweiten plattenförmigen Elementes ausgebildet ist.

Die beiden Grundflächen mit der ersten bzw. zweiten Struktur können direkt aneinander angrenzen. In diesem Fall bilden die Platten eine Einheit mit den beiden strukturierten Grundflächen in der Mitte und vorzugsweise unstrukturierten, also im wesentlichen glatten Grundflächen auf der Außenseite. Sie können auch jeweils nach außen weisen, so daß die Platten mit den unstrukturierten Flächen aneinander angrenzen. Schließlich ist es auch möglich, daß die beiden strukturierten Grundflächen beide in dieselbe Richtung weisen, entweder in die Richtung des Lichtaustritts aus der Lichtauskoppeleinrichtung oder in die entgegengesetzte Richtung.

Die Erfindung kann insbesondere vorsehen, daß die Lichtabstrahlung an der Lichtaustrittsfläche, bezogen auf eine Ebene senkrecht zu der Lichtaustrittsfläche, zumindest überwiegend in den Raumbereich erfolgt, der einem Winkelbereich von 0° bis 90° bezüglich einer Achse senkrecht zu der Lichtaustrittsfläche durch den Lichtschwerpunkt der Leuchte entspricht.

Weiterhin ist vorgesehen dass, eine der Lampe gegenüberliegende Seite des Hohlraums als Reflektor ausgebildet ist.

Gemäß einer Ausführungsform ist vorgesehen, daß die der Lampe gegenüberliegende Wand des Hohlraums relativ zu der Lichtauskoppelfläche in einem spitzen Winkel geneigt ist, wobei diese Wand z. B. eine keilförmig geneigte Dachfläche und/oder eine schräg zu einer Dachfläche schräg gestellte Seitenwand sein kann.

Dabei kann vorgesehen sein, daß die besagte Wand oder die Lichtauskoppelfläche oder beide schräg zu dem Leuchtengehäuse angeordnet sind. Die Wand und die Lichtauskoppelfläche müssen nicht notwendig aneinander angrenzen, sondern können voneinander beabstandet sein, so daß sich beispielsweise die Form eines Keilstumpfs ergibt.

Hinsichtlich der Neigung der besagten Wand ist vorzugsweise vorgesehen, daß der besagte Winkel in einem Bereich von weniger als 30°, vorzugsweise in einem Bereich von weniger als 12° und besonders bevorzugt in einem Bereich von 6° bis 10° liegt.

Gemäß einer bevorzugten Ausführungsform ist vorgesehen, daß der Hohllichtleiter in einem Querschnitt senkrecht zu der Lampenachse eine Keilform oder die Form eines an der Spitze abgeschnittenen Keils aufweist.

Erfindungsgemäß kann insbesondere vorgesehen sein, daß ein Maximum der Lichtstärkeverteilungskurve bei einem Winkel von mehr als 25°, vorzugsweise zwischen 25° und 70°, besonders bevorzugt zwischen 30° und 55°, bezogen auf die besagte Achse senkrecht zu der Lichtaustrittsfläche, liegt. Die Lage des Maximums läßt sich bei Verwendung von Prismen durch den Prismenwinkel beeinflussen.

Weiterhin kann auch vorgesehen sein, daß die Lichtauskoppeleinrichtung eine Prismenanordnung zum Auskoppeln von Licht aufweist, wobei der Prismenwinkel der Prismen hinsichtlich der lichtlenkenden Eigenschaften einem Prismenwinkel eines Prismas aus einem Material mit einem Brechungsindex von 1,49 (Polymethylmethacrylat) von mehr als 110°, insbesondere mehr als 120°, vorzugsweise zwischen 120° und 175°, besonders bevorzugt zwischen 120° und 155°, entspricht. Mit anderen Worten entspricht die Lichtstärkeverteilungskurve der entsprechenden Leuchte, wenn das Material der Prismen einen von 1,49 verschiedenen Brechungsindex hat, der Lichtstärkeverteilungskurve einer baugleichen Leuchte, bei der die Prismen aus Polymethylmethacrylat bestehen, die gleiche Grundform haben, aber einen anderen Prismenwinkel aufweisen, der in den oben genannten Bereichen liegt. Je nach dem verwendeten Material für die Prismen variiert nämlich der Prismenwinkel, der erforderlich ist, um eine bestimmte Lichtstärkeverteilungskurve zu erreichen. Nachfolgend werden Prismenwinkel immer bezogen auf einen Brechungsindex von 1,49, welches der Brechungsindex von Polymethylmetacrylat ist, angegeben, wobei sich die entsprechenden Prismenwinkel für andere Materialien aus den vorangehend genannten Relationen für die Abschirmung bzw. aus einfachen Versuchen mit Prismen der gleichen Grundform, aber einem anderen Prismenwinkel ergeben.

Die Erfindung kann weiterhin vorsehen, daß die Lichtauskoppeleinrichtung eine Prismenanordnung zum Auskoppeln von Licht aufweist, wobei hinsichtlich der lichtlenkenden Eigenschaften der Prismenwinkel der Prismen einen Prismenwinkel eines Prismas aus einem Material mit einem Brechungsindex von 1,49 von 110° bis 128° entspricht. Dieser Bereich ist besonders bevorzugt, wenn gleichzeitig eine Abschirmung des Lichts mit einem Abschirmwinkel im Bereich von 60° gewünscht ist.

Die Erfindung kann weiterhin vorsehen, daß die Leuchte als Tischleuchte ausgebildet ist, deren Lichtkopf die Lichtauskoppeleinrichtung aufweist, und die Lage des Hauptmaximums der Lichtstärkeverteilungskurve, bezogen auf eine vertikale Achse durch den Lichtschwerpunkt der Leuchte, zwischen 30° und 80°, bevorzugt zwischen 50° und 80° liegt.

Die Erfindung kann dabei vorsehen, daß die Lichtauskoppeleinrichtung eine Anordnung von Prismen aufweist, deren Prismenwinkel hinsichtlich der lichtlenkenden Eigenschaften einem Prismenwinkel eines Prismas aus einem Material mit einem Brechungsindex von 1,49 von 115° bis 175°, vorzugsweise 145° bis 175°, entspricht.

Die Erfindung kann weiterhin vorsehen, daß die Leuchte als Steh- oder Wandleuchte ausgebildet ist. Je nach Abstand von der zu beleuchtenden Fläche liegt das Hauptmaximum der Lichtstärkeverteilungskurve der C0/C180-Ebene, bezogen auf eine vertikale Achse durch den Lichtschwerpunkt der Leuchte, bevorzugt zwischen 30° und 70°, besonders bevorzugt zwischen 40° und 65°. Es kann insbesondere vorgesehen sein, daß die Lichtauskoppeleinrichtung eine Anordnung von Prismen aufweist, deren Prismenwinkel einem Prismenwinkel von 110° bis 175°, besonders bevorzugt zwischen 115° und 160°, eines Prismas aus einem Material mit einem Brechungsindex von 1,49 entspricht.

Die Erfindung kann weiterhin vorsehen, daß die Leuchte als Wallwasher ausgebildet ist und ein Maximum der Lichtstärkeverteilungskurve zwischen 5° und 40° bezüglich einer Achse durch den Lichtschwerpunkt der Leuchte senkrecht zu der Lichtaustrittsfläche und/oder parallel zur Vertikalen, besonders bevorzugt zwischen 10° und 25°, aufweist.

Die Erfindung kann dabei vorsehen, daß die Lichtauskoppeleinrichtung eine Anordnung von Prismen aufweist, deren Prismenwinkel hinsichtlich der lichtlenkenden Eigenschaften der Prismen einem Prismenwinkel eines Prismas aus einem Material mit einem Brechungsindex von 1,49 von 55° bis 80°, vorzugsweise zwischen 60 und 75°, oder 145° bis 175°, besonders bevorzugt 160° bis 175°, entspricht.

Die Erfindung kann weiterhin vorsehen, daß die Leuchte als Ceilingwasher ausgebildet ist und ein Maximum der Lichtstärkeverteilungskurve zwischen 40° und 85°, besonders bevorzugt zwischen 65° und 85°, bezogen auf eine Achse durch den Lichtschwerpunkt der Leuchte senkrecht zu der Lichtaustrittsfläche, oder zwischen 5° und 50°, besonders bevorzugt zwischen 5° und 35°, bezogen auf die besagte Achse senkrecht zu der Lichtaustrittsfläche oder zwischen 95° und 140°, besonders bevorzugt zwischen 95° und 125°, bezogen auf eine vertikale, nach unten gerichtete Achse durch den Lichtschwerpunkt der Leuchte, aufweist.

Die Erfindung kann weiterhin vorsehen, daß die Lichtauskoppeleinrichtung eine Anordnung von Prismen aufweist, deren Prismenwinkel hinsichtlich der lichtlenkenden Eigenschaften der Prismen einem Prismenwinkel eines Prismas aus einem Material mit Brechungsindex 1,49 von 145° bis 175°, besonders bevorzugt zwischen 160° und 175°, oder 55° bis 80°, besonders bevorzugt zwischen 60° und 75°, entspricht.

Die Erfindung kann weiterhin vorsehen, daß an zwei einander gegenüberliegenden Seiten des Hohllichtleiters, die zu der Lichtauskoppelfläche nicht parallel sind, jeweils eine Lampe angeordnet ist, welche Licht in den Hohllichtleiter einkoppelt und daß die Lichtstärkeverteilungskurve in einer Ebene senkrecht zu der Lichtaustrittsfläche zu einer Achse durch den Lichtschwerpunkt der Leuchte im wesentlichen symmetrisch ist, die beiden Flügel der Lichtstärkeverteilungskurve zu beiden Seiten der Symmetrieachse jeweils einen Winkelbereich von nicht mehr als 90° abdecken und der Winkelbereich um 0° die beiden Flügel voneinander trennt.

Die Erfindung kann weiterhin vorsehen, daß die beiden Hälften der Lichtstärkeverteilungskurve jeweils ein Maximum aufweisen, wobei das Maximum jeder der beiden Hälften bei einem Winkel von mehr als 25°, vorzugsweise zwischen 25° und 70°, besonders bevorzugt zwischen 35° und 60°, bezüglich der Symmetrieachse liegt.

Die Erfindung kann insbesondere vorsehen, daß die Lichtauskoppeleinrichtung eine Prismenanordnung zum Auskoppeln von Licht aufweist, wobei der Prismenwinkel der Prismen hinsichtlich der lichtlenkenden Eigenschaften einem Prismenwinkel eines Prismas aus einem Material mit einem Brechungsindex von 1,49 zwischen 110° und 175°, bevorzugt zwischen 121° und 175°, besonders bevorzugt zwischen 121° bis 155° entspricht.

Die Erfindung kann weiterhin vorsehen, daß sich die Höhe des Hohlraums des Hohllichtleiters, ausgehend von den beiden Seiten, an denen die Lampen angeordnet sind, zur Mitte des Hohlraums zumindest abschnittsweise verringert.

Die Erfindung kann weiterhin vorsehen, daß eine der Lichtauskoppelfläche gegenüberliegende Dachfläche konkav oder konvex ausgebildet ist.

Die Erfindung kann weiterhin vorsehen, daß der Prismenwinkel einer Prismenanordnung der Lichtauskoppeleinrichtung einem Prismenwinkel eines Prismas aus einem Material mit einem Brechungsindex von 1,49 von mehr als 145° entspricht.

Die Erfindung kann weiterhin vorsehen, daß eine der Lichtauskoppelfläche gegenüberliegende Dachfläche des Hohlraums spiegelnd reflektierend ausgebildet ist. Sie kann auch vollständig oder abschnittsweise diffus reflektierend oder insgesamt oder über Teilabschnitte ganz oder teilweise reflektierend ausgebildet sein.

Die Erfindung kann weiterhin vorsehen, daß das Verhältnis von der Breite des Hohlraums, bezogen auf eine Ebene senkrecht zu der Lampenachse, zu der Höhe des Hohlraums mehr als 3, vorzugsweise ungefähr 5 bis 9 beträgt.

Die Erfindung beruht auf der überraschenden Erkenntnis, daß es entgegen den bisherigen Vorstellungen in einer Hohllichtleitertechnik möglich ist, eine Lichtstärkeverteilung für schmale Maxima, wie sie für großräumige Ausleuchtungen benötigt werden, herbeiführen lassen. Insbesondere hat sich gezeigt, daß sich derartige Lichtstärkeverteilungskurven besonders gut mit Prismenwinkeln von 120° bis 175° realisieren lassen, wobei sich durch Wahl des Prismenwinkels die Lage der Maxima verändern läßt. Die Lage des Maximums läßt sich auch durch eine geeignete konvexe Gestaltung des Dachreflektors unabhängig von den Prismen verschieben. Überraschenderweise hat sich auch gezeigt, daß entgegen bisherigen Vorstellungen sich auch mit symmetrischen Prismen eine assymmetrische Lichtstärkeverteilungskurve herbeiführen läßt, wobei sich ein etwaiges residuales zweites Maximum dadurch unterdrükken läßt, daß eine einer Lampe gegenüberstehende reflektierende Wand zu der Lichtauskoppelfläche des Hohlraums des Hohllichtleiters in einem spitzen Winkel von vorzugsweise nicht mehr als 15° angestellt ist. Weiterhin hat sich überraschenderweise gezeigt, daß die Breite der Maxima durch die Wahl eines entsprechenden Reflektormaterials für eine der Lichtauskoppelfläche gegenüberliegende Dachfläche beeinflußt werden kann. Bei Verwendung eines hochglänzenden Reflektormaterials werden die Maxima der Lichtstärkeverteilungskurve schmäler, während ein diffus streuendes Reflektormaterial die Maxima verbreitert. Außerdem hat sich weiterhin gezeigt, daß durch eine konkave Ausgestaltung der Dachfläche die Breite der Maxima gegenüber einer ebenen Dachfläche vergrößern läßt. Ebenso hat sich gezeigt, daß durch die Wahl eines geeigneten Verhältnisses von Höhe zu Breite des Hohlraums des Hohllichtleiters, vorzugsweise kleiner als 1/3, die asymmetrische Lichtstärkeverteilung gefördert wird und sich residuale symmetrische Maxima verringern lassen. In der Anwendung läßt sich die Lage des Maximums in einer C-Ebene außerdem durch eine Neigung der Lichtauskoppelfläche zu den zu beleuchtenden Flächen beeinflussen.

Weitere Merkmale und Vorteile der Erfindung werden aus der nachfolgenen detaillierten Beschreibung von Ausführungsbeispielen der Erfindung anhand der beigefügten Zeichnungen deutlich.

Fig. 1       zeigt ein Ausführungsbeispiel einer erfindungsgemäßen Leuchte mit assymmetrischer Lichtstärkeverteilung,

Fig. 2a       zeigt die Lichstärkeverteilung einer Leuchte gemäß Fig. 1 bei Verwendung eines hochglänzenden Dachmaterials,

Fig. 2b       zeigt die Lichtstärkeverteilungskurve bei Verwendung eines diffus streuenden Dachmaterials,

Fig. 2c       zeigt die Lichtstärkeverteilungskurve bei Verwendung eines hochglänzenden Dachmaterials für einen größeren Prismenwinkel,

Fig. 3       zeigt eine Lichtstärkeverteilungskurve für eine Leuchte ohne Neigung des Dachreflektors mit einer der Lampe gegenüberstehenden senkrechten reflektierenden Wand,

Fig. 4       zeigt schematisch eine Leuchte als Vergleichsbeispiel ohne Neigung des Dachreflektors,

Fig. 5       zeigt eine alternative Ausführungsform einer erfindungsgemäßen Leuchte,

Fig. 6       zeigt eine weitere Abwandlung der erfindungsgemäßen Leuchte,

Fig. 7       zeigt eine dritte Abwandlung einer erfindungsgemäßen Leuchte,

Fig. 8 zeigt die Lichtstärkeverteilungskurve einer Leuchte gemäß Fig. 7,

Fig. 9 zeigt eine vierte Abwandlung einer erfindungsgemäßen Leuchte,

Fig. 10 zeigt eine fünfte Abwandlung einer erfindungsgemäßen Leuchte,

Fig. 11 zeigt eine sechste Abwandlung einer erfindungsgemäßen Leuchte,

Fig. 12 zeigt eine Ausführungsform der erfindungsgemäßen Leuchte als Wallwasher,

Fig. 12a zeigt schematisch die Lichtstärkeverteilungskurve des Wallwashers gemäß Fig. 12,

Fig. 13 zeigt eine Ausführungsform einer erfindungsgemäßen Leuchte als Ceilingwasher,

Fig. 13a zeigt schematisch die zugehörige Lichtstärkeverteilungskurve,

Fig. 14 zeigt eine alternative Anordnung eines erfindungsgemäßen Ceilingwashers,

Fig. 14a zeigt die zugehörige Lichtstärkeverteilungskurve,

Fig. 15 zeigt eine Ausführungsform einer erfindungsgemäßen Leuchte als Tischleuchte,

Fig. 16 zeigt ein Vergleichsbeispiel einer Leuche,

Fig. 17 zeigt schematisch die Anordnung der Prismenplatten der Leuchte gemäß Fig. 16,

Fig. 18a zeigt die Lichtstärkeverteilungskurve der Leuchte gemäß Fig. 16 für einen Prismenwinkel von 130°,

Fig. 18b zeigt die Lichtstärkeverteilungskurve der Leuchte gemäß Fig. 16 für einen Prismenwinkel von 150°,

Fig. 18c zeigt die Lichtstärkeverteilungskurve der Leuchte gemäß Fig. 16 für einen Prismenwinkel von 170°.

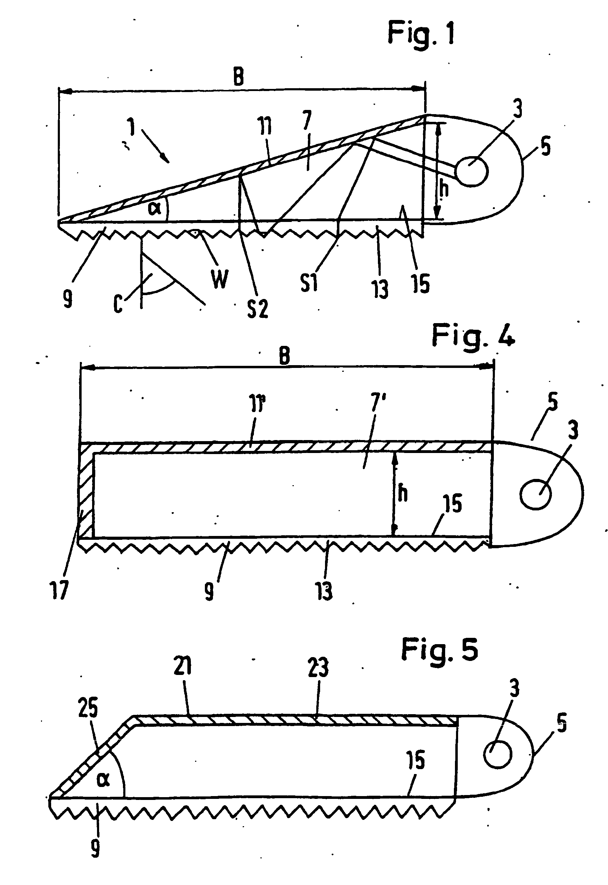

Fig. 1 zeigt ein Ausführungsbeispiel einer bevorzugten Ausführungsform einer erfindungsgemäßen Leuchte. Die Leuchte umfaßt einen Hohllichtleiter 1 sowie eine Lampe 3, welche an einer offenen Seite des Hohllichtleiters Licht in diesen einstrahlt. Zur möglichst vollständigen Einkopplung des von der Lampe 3 abgestrahlten Lichts ist diese mit einem Reflektor 5 versehen, der das auf ihn einfallende Licht in den Hohllichtleiter 1 hineinreflektiert.

Der Hohllichtleiter weist einen Hohlraum 7 auf, der von einer Prismenplatte 9 und einer schrägen Dachfläche 11 begrenzt wird. Die Prismenplatte 9 weist regelmäßig angeordnete lineare Prismen 13 mit einem dreieckigen symmetrischen Querschnitt auf, wie in Fig. 1 gezeigt. Sie bilden auf der von dem Hohlraum 7 abgewandten Seite eine Struktur von parallelen Rillen und satteldachförmigen Erhebungen. Die Prismen 13 dienen zum selektiven Auskoppeln des von der Lampe einfallenden Lichts. Dies ist beispielhaft anhand von zwei Strahlen S1 und S2 angedeutet. Ein Strahl S1, der mit einem geeigneten Winkel einfällt, wird an der Grenzfläche 15 in die Prismenplatte 9 hinein gebrochen und tritt an der Außenkante der Prismen 13 aus. Ein zweiter Strahl S2 fällt an der Grenzfläche der Prismen 13 mit dem Grenzwinkel der Totalreflexion ein und wird bei geeigneter Winkellage in den Hohlraum 7 zurückreflektiert, nachfolgend an der Dachfläche 11 reflektiert und fällt nachfolgend wieder auf die Grenzfläche 15 ein, trifft diesmal mit einem geeigneten Winkel auf die Grenzfläche der Prismen 13 auf und tritt, wie in Fig. 1 gezeigt, aus der Prismenplatte aus. Bei geeigneter Wahl des Prismenwinkels entsprechend den vorangehend genannten Formeln erzeugen die Prismen 13 eine Abschirmung mit dem Grenzwinkel C.

Bei diesem Ausführungsbeispiel beträgt die Höhe h des Hohlraums auf der Seite der Lampe 3 40 mm und die Breite des Hohlraums 250 mm. Der Winkel w der Prismen beträgt ungefähr 115°. Das Material der Prismenplatte bei diesen und allen nachfolgend angeführten Ausführungsbeispielen ist Polymethylmetacrylat mit einem Brechungsindex n = 1,49. Selbstverständlich können auch andere Materialien verwendet werden, wobei dann die Prismenwinkel entsprechend dem unterschiedlichen Brechungsindex gegenüber den nachfolgenden Angaben entsprechend geändert werden müssen.

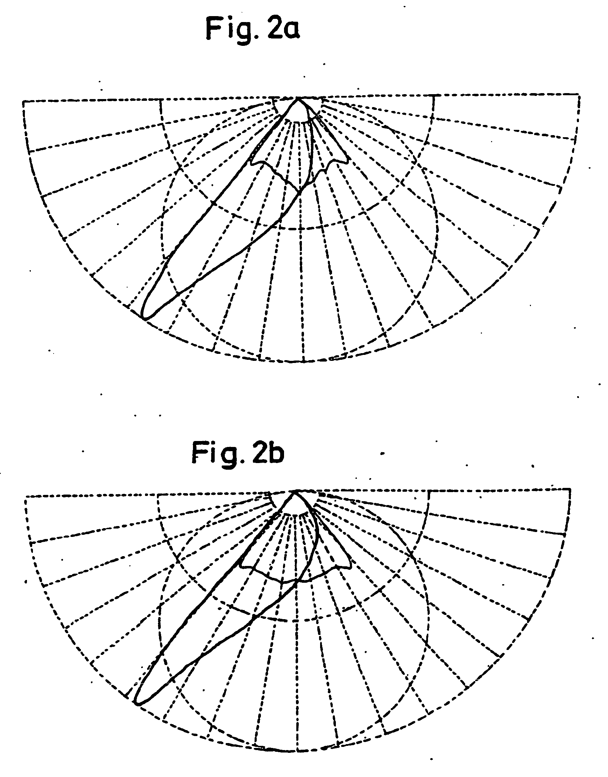

In Fig. 2a ist die zugehörige Lichtstärkeverteilungskurve für den Fall dargestellt, daß die Dachfläche 11 hochreflektierend ist. Hierfür ist gemäß einer bevorzugten Ausführungsform die Dachfläche 11 mit dem Spiegelmaterial MIRO II der Firma Alanod ausgekleidet, das einen Reflexionskoeffizienten von ca. 95 % aufweist. Die fette Linie stellt die Lichtstärkeverteilungskurve in der C0/180-Ebene dar, die dünne Linie stellt die Lichtstärkeverteilungskurve in der C90/270-Ebene dar. Während die Lichtstärkeverteilungskurve in der C90/270-Ebene parallel zu den Prismen 13 weitgehend symmetrisch zu der vertikalen Achse (0°) ist, ist die Lichtstärkeverteilungskurve für die C0/180-Ebene asymmetrisch und stark gerichtet. Sie besteht aus einem einzigen Maximum bei ungefähr 37° und einer Halbwertsbreite von ungefähr 30°. Die Lichtabstrahlung ist insgesamt auf einen Winkelbereich von ungefähr 60° begrenzt.

Fig. 2b zeigt die Lichtstärkeverteilungskurve für dieselbe Geometrie wie in Fig. 1 gezeigt, jedoch für den Fall, daß der Dachreflektor diffus streuend ausgebildet ist und z.B. aus Teflon besteht. Im Vergleich mit Fig. 2a sieht man, daß sich die Lage des Maximums (ca. 37°) nicht geändert hat. Die Halbwertsbreite ist jedoch etwas kleiner (ca. 20°) und der von der Lichtstärkeverteilungskurve insgesamt abgedeckte Winkelbereich ist etwas größer, nämlich ca. 70°. Insgesamt erkennt man, daß in der Ebene senkrecht zu der Längsrichtung der Prismen eine starke Beeinflussung der Lichtstärkeverteilungskurve stattfindet, in der Ebene parallel zu der Längsrichtung der Prismen sich dagegen eine im wesentlichen ungestörte symmetrische Verteilung ergibt.

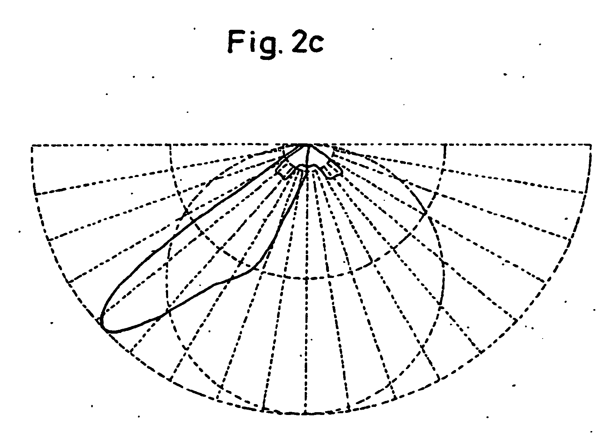

Fig. 2c zeigt eine Lichtstärkeverteilungskurve für eine Leuchte gemäß Fig. 1, mit einem hochglänzenden Dachreflektor (MIRO II), bei der der Prismenwinkel w 150° beträgt. Man erkennt, daß sich die Lage des Maximums zu höheren Winkeln, nämlich zu ca. 48° verlagert hat. Die Halbwertsbreite beträgt wieder ungefähr 30° und der gesamte abgedeckte Winkelbereich ungefähr 50°.

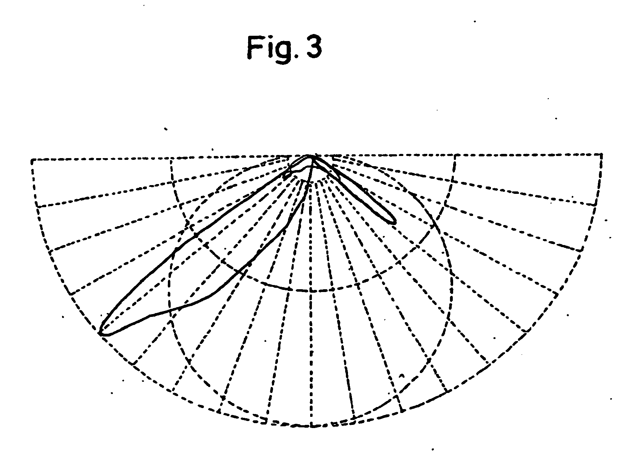

Zum Vergleich ist in Fig. 3 die Lichtstärkeverteilungskurve für eine Leuchte mit einer Konstruktion wie in Fig. 4 gezeigt dargestellt. Diese Leuchte weist einen Hohllichtleiter mit einem rechteckigen Hohlraum 7' auf, bei dem die Dachfläche 11' zu der Prismenplatte 9 parallel ist. Auf der der Lampe 3 gegenüberliegenden Seite ist der Hohlraum 7' durch eine reflektierende Abschlußwand 17 verschlossen. Die Höhe h und die Breite B betragen wieder 40 mm bzw. 250 mm. Der Prismenwinkel w beträgt 150°. Man erkennt aus Fig. 3, daß bei Verwendung einer der Lampe 3 gegenüberstehenden senkrechten Abschlußwand 17 ein Nebenmaximum mit geringerer Intensität entsteht, das bei vielen lichttechnischen Anwendungen unerwünscht ist. Ein Vergleich der Lichtstärkeverteilungskurven und Fig. 2a bis c und Fig. 3 zeigt, daß dieses Nebenmaximum unterdrückt wird, wenn man die der Lampe 3 gegenüberliegende Wand zu der Prismenplatte 9 schräg anstellt.

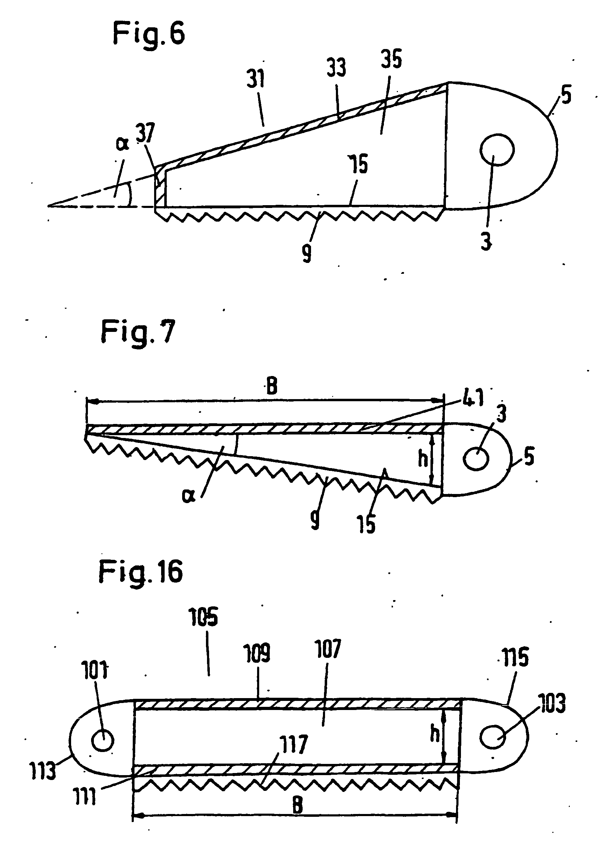

Fig. 5 zeigt eine alternative Ausführungsform der erfindungsgemäßen Leuchte, bei welcher der Hohllichtleiter 21 keine Keilform besitzt, sondern vielmehr eine Dachfläche 23 parallel zu der Prismenplatte 9 sowie eine in einem Winkel $\alpha$ von beispielsweise von 7,5° schräggestellte Abschlußwand 25 aufweist. Fig. 6 zeigt eine weitere Abwandlung der Leuchte gemäß Fig. 1, bei der der Hohllichtleiter 31 eine Keilstumpfform aufweist, bei der die Dachfläche 33 zu der Prismenplatte 9 in einem Winkel $\alpha$ von ca. 7,5° geneigt ist und der Hohlraum 35 auf der der Lampe 3 gegenüberliegenden Seite durch eine zu der Prismenplatte 9 senkrecht stehende Wand 37 abgeschlossen ist. Mit den Ausführnmgsformen gemäß Fig. 5 und Fig. 6 läßt sich ähnlich wie bei der Ausführungsform nach Fig. 1 das Nebenmaximum, wie es bei der Lampe gemäß Fig. 4 auftritt, unterdrücken.

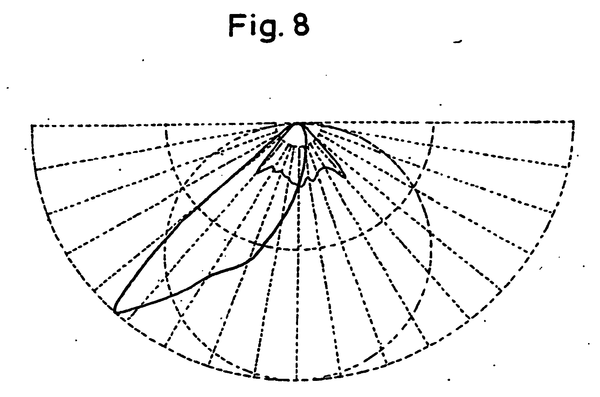

Fig. 7 zeigt eine Abwandlung der Leuchte gemäß Fig. 1, bei der die Dachfläche 41 waagrecht verläuft und die Prismenplatte 9 in einem Winkel von 7,5° angestellt ist. Die Höhe h auf der Lichteintrittsseite beträgt dabei wieder 40 mm und die Breite B 250 mm. Die zugehörige Lichtstärkeverteilungskurve ist in Fig. 8 dargestellt. Man erkennt, daß sich das Maximum der Lichtstärkeverteilungskurve in der C0/180-Ebene um 7,5°, also um den Anstellwinkel $\alpha$ verschoben hat.

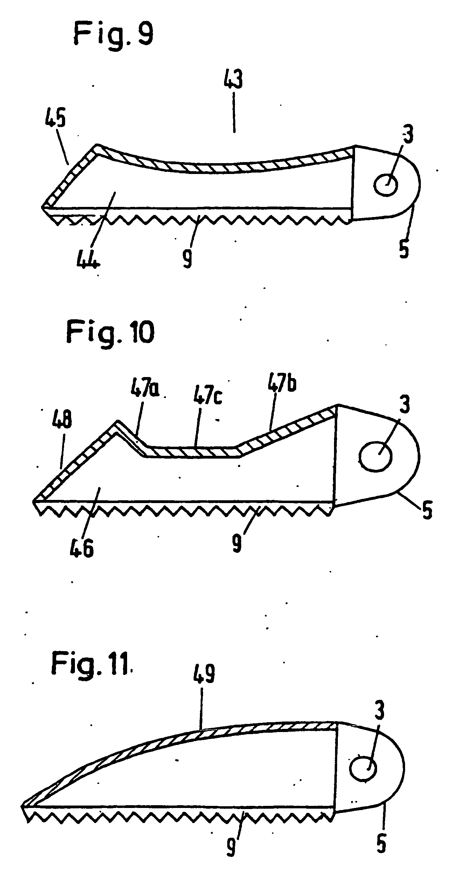

Die Fig. 9 bis 11 zeigen weitere Ausführungsformen von erfindungsgemäßen Leuchten, die von der strikten Keilform abweichen. In Fig. 9 und 10 ist die Dachfläche in einer allgemein konkaven Form in den Hohlraum des Hohllichtleiters hinein vertieft ausgebildet. Im Fall der Ausführungsform der Fig. 9 ist die Dachfläche 43 konkav gekrümmt ausgebildet und nach innen in den Hohlraum 44 hinein gewölbt. Auf der der Lampe 3 gegenüberliegenden Seite wird der Hohlraum 44 durch eine zu der Prismenplatte 9 schräg angestellte Abschlußwand 45 abgeschlossen.

Die Ausführungsform gemäß Fig. 10 ist insoweit ähnlich derjenigen der Fig. 9, als eine Dachfläche in den Hohlraum 46 hinein vertieft ausgebildet ist. Hier besteht die Dachfläche aus zwei schräg nach innen gerichteten Flächen 47a und 47b, zwischen denen sich eine im wesentlichen zu der Prismenplatte 9 parallele Dachfläche 47c erstreckt. Die Dachfläche 47c kann auch gegebenenfalls relativ zu der Prismenplatte 9 geneigt sein. Auch hier wird der Hohlraum 46 durch eine gegenüber der Lampe 3 liegende Abschlußwand 48 abgeschlossen, die mit der Prismenplatte 9 einen spitzen Winkel einschließt.

Bei dem Ausführungsbeispiel gemäß Fig. 11 ist die Dachfläche 49 konvex gekrümmt ausgebildet und schließt an ihrem von der Lampe 3 abgewandten Ende mit der Prismenplatte 9 einen spitzen Winkel ein.

Die vorangehenden Beispiele zeigen, daß die Lage des Maximums sich gezielt durch eine Änderung des Prismenwinkels sowie durch eine Änderung der Neigung der Prismenplatte und/oder der Neigung des Dachreflektors beeinflussen läßt. Die Halbwertsbreite und den abgedeckten Winkelbereich kann man durch eine spiegelnd reflektierende oder diffus streuende Ausbildung der Dachfläche beeinflussen. Ersteres wirkt in Richtung einer schmäleren Lichtsstärkeverteilung, letzteres in Richtung einer breiteren Lichtstärkeverteilung. Es hat sich weiterhin herausgestellt, daß eine Verbreiterung der Lichtstärkeverteilung auch durch eine konkave Ausbildung der Dachfläche erreicht werden kann. Durch eine geeignete konvexe Ausbildung der Dachfläche, beispielsweise wie in Fig. 11 gezeigt, kann auch die Lage der Maxima der Lichtstärkeverteilungskurve beeinflußt werden.

Die erfindungsgemäßen Leuchten können als Tischleuchten, Stehleuchten, Wandleuchten oder dgl. ausgebildet sein. Insbesondere können sie als Wandfluter (Wallwasher) oder Dekkenfluter (Ceilingwasher) ausgebildet sein. Überraschenderweise hat sich gezeigt, daß die für diese Anwendungen erforderliche extreme Lage des Maximums der Lichtsstärkeverteilungskurve von vorzugsweise 10° bis 25° sich mit einer Hohllichtleitertechnik mit einer Prismenauskopplung erreichen läßt.

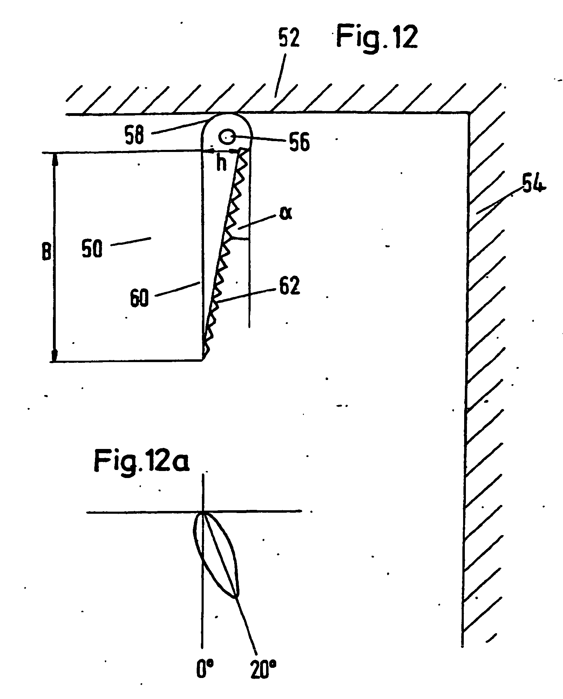

Fig. 12 zeigt schematisch einen erfindungsgemäßen Wallwasher 50, der an einer Decke 52 aufgehängt ist und eine Wand 54 anstrahlt. Die Wand 54 soll möglichst gleichmäßig ausgeleuchtet werden. Hierfür liegt das Maximum der Lichtstärkeverteilungskurve, wie in Fig. 12a gezeigt, vorzugsweise bei ca. 20°. Der in Fig. 12 gezeigte Wallwasher ist im wesentlichen entsprechend dem Ausführungsbeispiel gemäß Fig. 7 aufgebaut und weist eine Lampe 56 mit einem Reflektor 58 sowie einen Hohllichtleiter mit einer Dachfläche 60 und einer Prismenplatte 62 auf, wobei die Dachfläche 60 gerade an den Reflektor 58 anschließt und die Prismenplatte 62 um einen Winkel $\alpha$, der gleichzeitig den Winkel zwischen der Dachfläche 60 und der Prismenplatte 62 bildet, gegenüber dem Reflektor geneigt ist. Die Dachfläche 60 ist bei diesem Ausführungsbeispiel parallel zu der Vertikalen, also senkrecht zu der Decke 52 angeordnet. Die Höhe h auf der Seite der Lampe beträgt 16 mm und die Breite B des Hohllichtleiters beträgt 127 mm. Die Prismenplatte weist Prismen mit einem Prismenwinkel von 170° auf. Der Winkel $\alpha$ beträgt 8°.

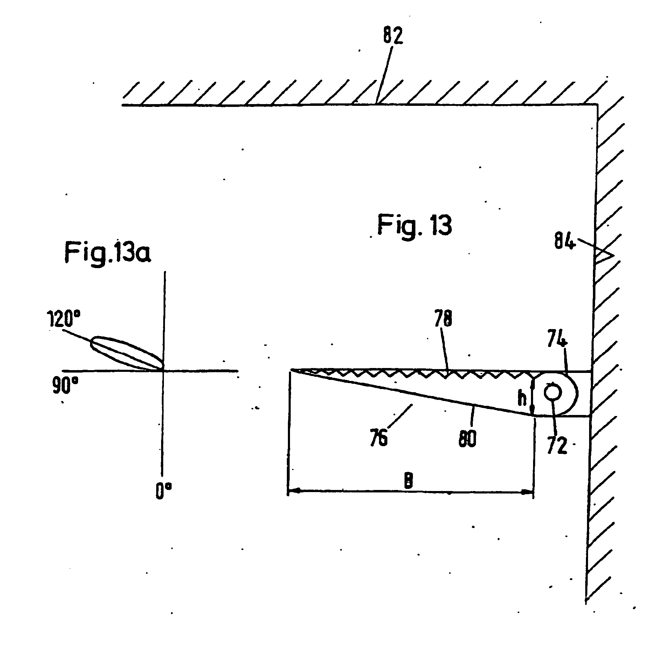

Fig. 13 zeigt schematisch die Anwendung einer erfindungsgemäßen Leuchte als Ceiling-washer. Der Ceiling-washer weist wieder eine Lampe 72 mit einem Reflektor 74 sowie einen keilförmigen Hohllichtleiter 76 auf, der eine gerade an den Reflektor 74 anschließende Prismenplatte 78 sowie eine schräg zu dem Reflektor 74 angeordnete reflektierende Dachfläche 80 aufweist. Bei diesem Ausführungsbeispiel ist die Prismenplatte 78 waagerecht, d. h. parallel zu der Decke 82 bzw. senkrecht zu der Wand 84 angeordnet. Fig. 13a zeigt schematisch die zugehörige Lichtstärkeverteilungskurve. Bei einer Höhe h von 16 mm, einer Breite von 127 mm und einem Winkel der Prismen von 170° ergibt sich bei dem dargestellten Ausführungsbeispiel ein Maximum der Lichtstärkeverteilungskurve bei ca. 120° bezüglich der Vertikalen.

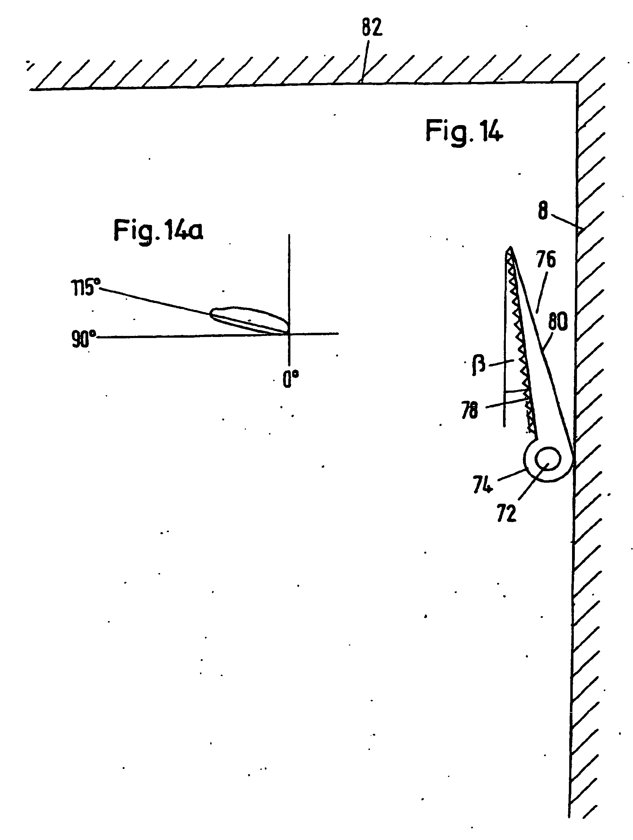

Fig. 14 zeigt eine alternative Anordnung eines Ceilingwashers, wobei dieselben Bezugszeichen wie in Fig. 10 verwendet sind. Bei dieser Ausführungsform ist die Prismenplatte im wesentlichen vertikal angeordnet, im vorliegenden Fall mit einem Winkel $\beta$ von 5° zur Vertikalen. Für eine solche Anordnung ist eine Lichtstärkeverteilungskurve wie in Fig. 14a gezeigt erforderlich, um die Decke 82 großflächig auszuleuchten. Dies wird bei dem dargestellten Ausführungsbeispiel dadurch erreicht, daß der Prismenwinkel bei den Prismen der Platte 78 wesentlich kleiner ist und etwa 65° beträgt.

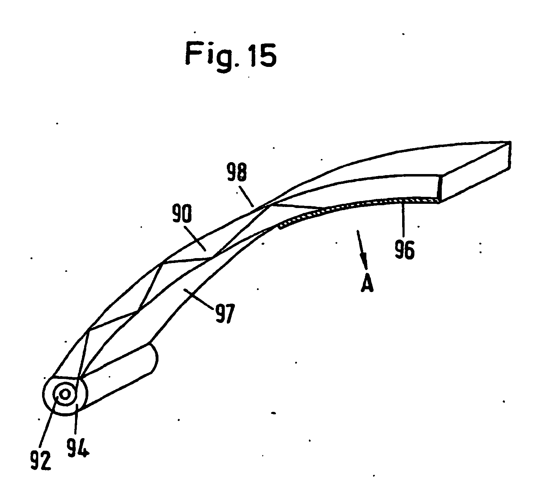

Fig. 15 zeigt eine weitere Ausführungsform einer erfindungsgemäßen Leuchte in einer Ausgestaltung als Tischleuchte. Der Hohllichtleiter 90 ist bei dieser Ausführungsform gekrümmt ausgebildet. An seinem einen Ende wird an einer Schmalseite durch eine Lampe 92, die von einem Reflektor 94 umgeben ist, Licht, wie vorangehend beschrieben, in den Hohllichtleiter 90 eingekoppelt. Am anderen Ende des Hohllichtleiters ist an dessen Unterseite eine ebenfalls gekrümmte Prismenplatte 96 vorgesehen, über welche in Richtung des Pfeils A Licht ausgekoppelt wird. Der Reflektor 97 neben der Prismenplatte 96 sowie die Dachfläche 98 gegenüber der Prismenplatte 96 können aus einem hochglänzenden Spiegelmaterial wie dem Material MIRO II der Firma Alanod bestehen.

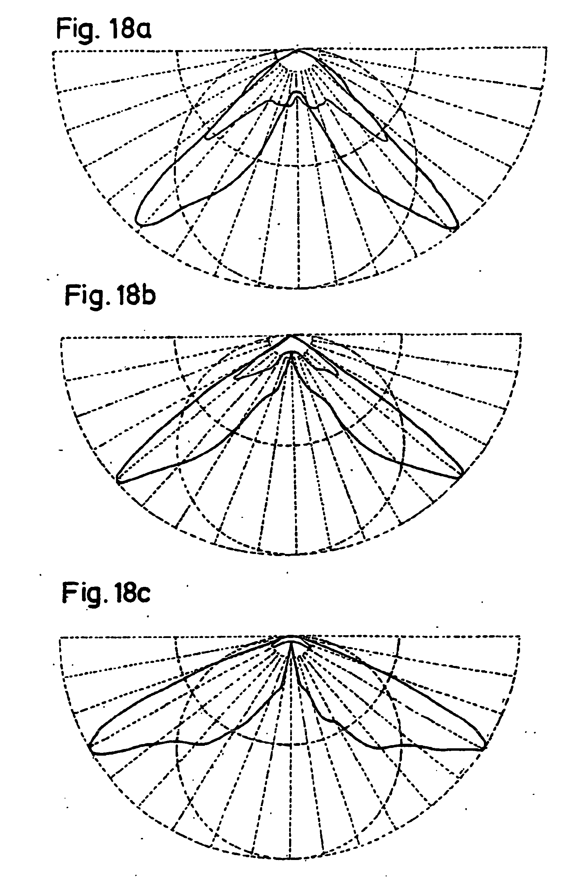

Fig. 16 zeigt ein Vergleichsbeispiel einer Leuchte, die, wie in Fig. 18a bis 18c gezeigt, eine symmetrische Lichtstärkeverteilungskurve mit zwei schmalen Maxima mit einer Halbwertsbreite von ungefähr 30° bis 40° aufweist. Die Leuchte nach diesem Ausführungsbeispiel besitzt zwei Lampen 101 und 103, die an den beiden Schmalseiten eines Hohllichtleiters 105 angeordnet sind und Licht in den Hohlraum 107 dieses Hohllichtleiters einstrahlen. Der Hohllichtleiter 105 weist eine hochglänzende reflektierende Deckenwand 109 auf, welche einer Prismenplatte 111 mit linearen Prismen gegenübersteht. Reflektoren 113 und 115, welche die Lampen 101 und 103 umgeben, reflektieren das auf sie einfallende Licht der Lampe 101 bzw. 103 in den Hohlraum 107. Zusätzlich zu der Prismenplatte 111 ist eine zweite Prismenplatte 117 vorgesehen, deren Prismen senkrecht zu den Prismen der Prismenplatte 111 verlaufen. Die Prismenplatten bestehen aus Polymethylmetacrylat (PMMA), das einen Brechungsindex von 1,49 besitzt. Die Höhe h des Hohllichtleiters beträgt bei diesem Ausführungsbeispiel 40 mm und seine Breite B beträgt 250 mm.

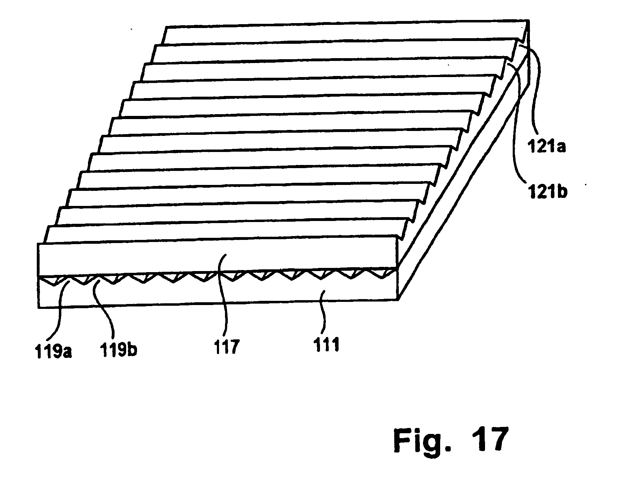

Die beiden Prismenplatten sind in Fig. 17 noch einmal gesondert dargestellt. Man erkennt in Fig. 17 die in Querrichtung verlaufenden Prismen 119a, 119b, ... der Prismenplatte 111 und die senkrecht dazu verlaufenden Prismen 121a, 121b, ... der Prismenplatte 117. Wie man erkennen kann, haben die Prismen im Querschnitt eine symmetrische Dreiecksform.

Fig. 18a bis 18c zeigen die Lichtstärkeverteilungskurve einer Leuchte gemäß Fig. 16 für verschiedene Prismenwinkel w, der für dieses Beispiel bei beiden Prismenplatten 111 und 117 der gleiche ist. Wie in den vorangehenden Zeichnungen ist mit der dicken Linie die Lichtstärkeverteilungskurve in der C0/180-Ebene und mit der dünnen Linie die Lichtstärkeverteilungskurve in der C90/270-Ebene dargestellt.

Fig. 18a zeigt die Lichtstärkeverteilungskurven für den Fall, daß die Prismenwinkel der beiden Prismenplatten 111 und 117 jeweils 130° betragen. Man erkennt, daß sich zwei deutlich getrennte Maxima bei ungefähr 40° zur Vertikalen ergeben, die durch ein Minimum ungefähr bei 0° getrennt sind. Die beiden Maxima haben eine Halbwertsbreite von ungefähr 30°. Die Breite der beiden (symmetrischen) Hälften der Lichtstärkeverteilungskurve beträgt jeweils ungefähr 50°.

Fig. 18b zeigt die Lichtstärkeverteilungskurve für eine identisch aufgebaute Leuchte, jedoch mit einem Prismenwinkel w von 150°. Man erkennt, daß sich die Maxima zu Winkeln von etwa 50° verlagert haben. Das Minimum bei 0° hat sich vertieft. Bei beiden Hälften der Lichtstärkeverteilungskurve ist bereits bei ca. 10° zur Vertikalen die Lichtstärke praktisch auf 0 abgesunken, so daß die Breite der beiden "Keulen" in etwa dieselbe ist, wie bei Fig. 15a. Auch die Halbwertsbreite der beiden Maxima ist vergleichbar, also etwa 20° bis 30°.

Fig. 18c zeigt die Lichtstärkeverteilungskurve einer Leuchte, die identisch, wie im Fall der Fig. 18a und 18b, ausgebildet ist, bei der jedoch der Prismenwinkel der Prismenplatten 111 und 117 170° beträgt. Die Maxima sind aufgrund des größeren Prismenwinkels noch weiter zu höheren Winkeln verlagert, im vorliegenden Fall 60°. Das Minimum bei 0° hat sich noch weiter verstärkt. Allerdings sind die beiden Maxima deutlich verbreitert und haben eine Halbwertsbreite von etwa 40°. Ebenso hat sich auch der Winkelbereich, in dem eine nennenswerte Lichtstärke auftritt, auf etwa 60° erweitert.

Die Lichtstärkeverteilungskurven für die C90/270-Ebene zeigen eine ähnliche Verlagerung der Maxima zu höheren Winkeln für größere Prismenwinkel.

Obwohl bei der Leuchte gemäß Fig. 16 zwei Prismenplatten mit zueinander orthogonalen Prismen verwendet wurden, wird darauf hingewiesen, daß natürlich auch nur mit einer einzigen Prismenplatte 111 realisiert werden kann, wobei sich dann eine Gestaltung der Lichtstärkeverteilungskurve, wie vorangehend mit Bezug auf Fig. 18a bis 18c erläutert, nur für die C0/180-Ebene oder die C90/270-Ebene ergibt. Ebenso können bei den vorangehend genannten Ausführungsbeispielen, die mit Bezug auf die Fig. 1 bis 3 und 5 bis 15 erläutert wurden, ähnlich wie bei der Leuchte der Fig. 16 zwei übereinanderliegende Prismenplatten mit zueinander orthogonalen, allgemeiner nicht kollinearen Prismen verwendet werden, um die Lichtstärkeverteilung in verschiedenen C-Ebenen zu formen.

Die in der vorangehenden Beschreibung, den Ansprüchen und den Zeichnungen offenbarten Merkmale der Erfindung können sowohl einzeln als auch in beliebiger Kombination für die Verwirklichung der Erfindung mit ihren verschiedenen Ausführungsformen wesentlich sein.

Bezugszeichenliste

| | |
|---|---|
| 1 | Hohllichtleiter |
| 3 | Lampe |
| 5 | Reflektor |
| 7,7' | Hohlraum |
| 9 | Prismenplatte |
| 11, 11' | Dachfläche |
| 13 | Prismen |
| 15 | Grenzfläche |
| 17 | Abschlußwand |
| 21 | Hohllichtleiter |
| 23 | Dachfläche |
| 25 | Abschlußwand |
| 31 | Hohllichtleiter |
| 33 | Dachfläche |
| 35 | Hohlraum |
| 37 | Wand |
| 41 | Dachfläche |
| 43 | Dachfläche |
| 44 | Hohlraum |
| 45 | Abschlußwand |
| 46 | Hohlraum |
| 47a | schräge Dachfläche |
| 47b | schräge Dachfläche |
| 47c | waagerechte Dachfläche |
| 48 | Abschlußwand |
| 49 | konvexe Dachfläche |
| 50 | Wallwasher |
| 52 | Decke |
| 54 | Wand |
| 56 | Lampe |

| 58 | Reflektor |
| 60 | Dachfläche |
| 62 | Prismenplatte |
| 72 | Lampe |
| 74 | Reflektor |
| 76 | Hohllichtleiter |
| 78 | Prismenplatte |
| 80 | Dachfläche |
| 82 | Decke |
| 84 | Wand |
| 90 | Hohllichtleiter |
| 92 | Lampe |
| 94 | Reflektor |
| 96 | Prismenplatte |
| 97 | Reflektor |
| 98 | Reflektor |
| 101, 103 | Lampe |
| 105 | Hohllichtleiter |
| 107 | Hohlraum |
| 109 | Deckenwand |
| 111 | Prismenplatte |
| 113 | Reflektor |
| 115 | Reflektor |
| 117 | Prismenplatte |
| 119a,119b | Prismen |
| 121a, 121b | Prismen |
| S1, S2 | Lichtstrahlen |

**Patentansprüche**

1. Leuchte, insbesondere Innenraumleuchte mit einer Lichtaustrittsfläche und einer oder mehreren Lampen (3; 101, 103), deren Licht zumindest teilweise über die besagte Lichtaustrittsfläche abgegeben wird, wobei die Leuchte einen Hohllichtleiter (1; 107) umfaßt, der einen Hohlraum mit reflektierenden Wänden und eine refraktive Lichtauskoppeleinrichtung (9; 111, 117) aufweist, die an einer Lichtauskoppelfläche (15) des Hohlraums einfallendes Licht durch Lichtbrechung aus dem Hohllichtleiter (1; 107) zu der Lichtaustrittsfläche auskoppelt, wobei mindestens eine Lampe (3; 101, 103) an einer zu der Lichtauskoppelfläche nicht parallelen Seite Licht in den Hohllichtleiter einstrahlt, **dadurch gekennzeichnet, daß** für eine Ebene senkrecht zu der Lichtaustrittsfläche die Lichtstärkeverteilungskurve des über die Lichtaustrittsfläche abgegebenen Lichts ein oder mehrere voneinander getrennte Flügel aufweist, die jeweils im wesentlichen in einem Winkelbereich von 0° bis 90°, bezogen auf eine Achse senkrecht zur Lichtaustrittsfläche durch den Lichtschwerpunkt der Leuchte, liegen und die jeweils einen Spitzenbereich und daran beidseits anschließende Flankenbereiche, in denen die Lichtstärke auf einen deutlich geringeren Wert als in dem Spitzenbereich abfällt, aufweisen, wobei der Spitzenbereich bei Winkeln größer als 0° liegt und eine der Flanken zu dem Winkelbereich um 0° hin abfällt, wobei eine der Lampe gegenüberliegende Seite des Hohlraums (11; 25; 37) als Reflektor ausgebildet ist, und die der Lampe gegenüberliegende Wand (11; 37) des Hohlraums relativ zu der Lichtauskoppelfläche in einem spitzen Winkel ($\alpha$) geneigt ist.

2. Leuchte nach Anspruch 1, **dadurch gekennzeichnet, daß** die Flügel, bezogen auf eine Achse senkrecht zu der Lichtaustrittsfläche durch den Lichtschwerpunkt der Leuchte, im wesentlichen symmetrisch liegen und jeweils im wesentlichen in einem Winkelbereich von 0° bis 90° liegen.

3. Leuchte nach Anspruch 1 oder 2, **dadurch gekennzeichnet, daß** die Lichtauskoppeleinrichtung eine Anordnung von im Querschnitt symmetrischen linearen Prismen (13; 119a, 119b, 121 a, 121b) aufweist.

4. Leuchte nach einem der Ansprüche 1 bis 3, **dadurch gekennzeichnet, daß** die Lichtabstrahlung an der Lichtaustrittsfläche, bezogen auf eine Ebene senkrecht zu der Lichtaustrittsfläche, zumindest überwiegend in den Raumbereich erfolgt, der einem Winkelbereich von 0° bis 90° bezüglich einer Achse senkrecht zu der Lichtaustrittsfläche durch den Lichtschwerpunkt der Leuchte entspricht.

**5.** Leuchte nach einem der Ansprüche 1 bis 4, **dadurch gekennzeichnet, daß** der Winkel ($\alpha$) in einem Bereich von weniger als 30° liegt.

**6.** Leuchte nach einem der Ansprühe 1 bis 5, **dadurch gekennzeichnet, daß** der Hohllichtleiter in einem Querschnitt senkrecht zu der Lampenachse eine Keilform oder die Form eines an der Spitze abgeschnittenen Keils aufweist.

**7.** Leuchte nach einem der Ansprüche 1 bis 6, **dadurch gekennzeichnet, daß** ein Maximum der Lichtstärkeverteilungskurve bei einem Winkel von mehr als 25°, bezogen auf die besagte Achse senkrecht zu der Lichtaustrittsfläche, liegt.

**8.** Leuchte nach einem der Ansprüche 1 bis 7, **dadurch gekennzeichnet, daß** die Lichtauskoppeleinrichtung eine Anordnung von Prismen (13; 111, 117) zum Auskoppeln von Licht aufweist, deren Prismenwinkel hinsichtlich der lichtlenkenden Eigenschaften einem Prismenwinkel eines Prismas aus einem Material mit einem Brechungsindex von 1,49 von mehr als 110° entspricht.

**9.** Leuchte nach einem der Ansprüche 1 bis 7, **dadurch gekennzeichnet, daß** die Lichtauskoppeleinrichtung eine Anordnung von Prismen (13) zum Auskoppeln von Licht aufweist, deren Prismenwinkel hinsichtlich der lichtlenkenden Eigenschaften der Prismen einem Prismenwinkel eines Prismas aus einem Material mit einem Brechungsindex von 1,49 von 110° bis 128° entspricht.

**10.** Leuchte nach einem der Ansprüche 1 bis 9, **dadurch gekennzeichnet, daß** die Leuchte als Tischleuchte ausgebildet ist, deren Lichtkopf die Lichtauskoppeleinrichtung (96) aufweist, und die Lage des Hauptmaximums der Lichtstärkeverteilungskurve, bezogen auf eine vertikale Achse durch den Lichtschwerpunkt der Leuchte, zwischen 40° und 80° liegt.

**11.** Leuchte nach Anspruch 10, **dadurch gekennzeichnet, daß** die Lichtauskoppeleinrichtung eine Anordnung von Prismen aufweist, deren Prismenwinkel hinsichtlich der lichtlenkenden Eigenschaften einem Prismenwinkel eines Prismas aus einem Material mit einem Brechungsindex von 1,49 von 130° bis 175° entspricht.

**12.** Leuchte nach einem der Ansprüche 1 bis 9, **dadurch gekennzeichnet, daß** die Leuchte als Steh- oder Wandleuchte ausgebildet ist.

**13.** Leuchte nach einem der Ansprüche 1 bis 9, **dadurch gekennzeichnet, daß** sie als Wall-washer ausgebildet ist und ein Maximum der Lichtstärkeverteilungskurve zwischen 5° und 40° bezüglich der besagten Achse senkrecht zu der Lichtaustrittsfläche aufweist.

**14.** Leuchte nach Anspruch 13, **dadurch gekennzeichnet, daß** die Lichtauskoppeleinrichtung eine Anordnung von Prismen aufweist, deren Prismenwinkel hinsichtlich der lichtlenkenden Eigenschaften der Prismen einem Prismenwinkel eines Prismas aus einem Material mit einem Brechungsindex von 1,49 von 55° bis 80° oder 145° bis 175° entspricht.

**15.** Leuchte nach einem der Ansprüche 1 bis 9, **dadurch gekennzeichnet, daß** sie als Ceilingwasher ausgebildet ist und ein Maximum der Lichtstärkeverteilungskurve zwischen 40° und 85° oder 5° bis 50°, bezogen auf die besagte Achse senkrecht zu der Lichtaustrittsfläche, aufweist.

**16.** Leuchte nach Anspruch 15, **dadurch gekennzeichnet, daß** die Lichtauskoppeleinrichtung eine Anordnung von Prismen aufweist, deren Prismenwinkel hinsichtlich der lichtlenkenden Eigenschaften der Prismen einem Prismenwinkel eines Prismas aus einem Material mit Brechungsindex 1,49 von 145° bis 175° oder 55° bis 80° entspricht.

**17.** Leuchte, insbesondere Innenraumleuchte mit einer Lichtaustrittsfläche und einer oder mehreren Lampen (3; 101, 103), deren Licht zumindest teilweise über die besagte Lichtaustrittsfläche abgegeben wird, wobei die Leuchte einen Hohllichtleiter (1; 107) umfaßt, der einen Hohlraum mit reflektierenden Wänden und eine refraktive Lichtauskoppeleinrichtung (9; 111, 117) aufweist, die an einer Lichtauskoppelfläche (15) des Hohlraums einfallendes Licht durch Lichtbrechung aus dem Hohllichtleiter (1; 107) zu der Lichtaustrittsfläche auskoppelt, wobei mindestens eine Lampe (3; 101, 103) an einer zu der Lichtauskoppelfläche nicht parallelen Seite Licht in den Hohllichtleiter einstrahlt, **dadurch gekennzeichnet, daß** für eine Ebene senkrecht zu der Lichtaustrittsfläche die Lichtstärkeverteilungskurve des über die Lichtaustrittsfläche abgegebenen Lichts ein oder mehrere voneinander getrennte Flügel aufweist, die jeweils im wesentlichen in einem Winkelbereich von 0° bis 90°, bezogen auf eine Achse senkrecht zur Lichtaustrittsfläche durch den Lichtschwerpunkt der Leuchte, liegen und die jeweils einen Spitzenbereich und daran beidseits anschließende Flankenbereiche, in denen die Lichtstärke auf einen deutlich geringeren Wert als in dem Spitzenbereich abfällt, aufweisen, wobei der Spitzenbereich bei Winkeln größer als 0° liegt und eine der Flanken zu dem Winkelbereich um 0° hin abfällt, wobei an zwei einander gegenüberliegenden Seiten des Hohllichtleiters (105), die zu der Lichtauskoppelfläche nicht parallel sind, jeweils eine Lampe (101, 103) angeordnet ist, welche Licht in den Hohllichtleiter (105) einkoppelt und daß die Lichtstärkeverteilungskurve in einer Ebene senkrecht zu der Lichtaustrittsfläche zu einer Achse durch den Lichtschwerpunkt der Leuchte im wesentlichen symmetrisch ist, die beiden Flügel der Lichtstärkeverteilungskurve zu beiden Seiten der Symmetrieachse jeweils einen Winkelbereich von nicht mehr als 90° abdecken und der Winkelbereich um 0° die beiden Flügel voneinander trennt, wobei sich die Höhe (h) des Hohlraums des Hohllichtleiters, ausgehend von den beiden Seiten, an denen die Lampen angeordnet sind, zur Mitte des Hohlraums hin zumindest abschnittsweise verringert.

**18.** Leuchte nach Anspruch 17, **dadurch gekennzeichnet, daß** die beiden Flügel der Lichtstärkeverteilungskurve jeweils ein Maximum aufweisen, wobei das Maximum jedes der beiden Flügel bei einem Winkel von mehr als 25° bezüglich der Symmetrieachse liegt.

**19.** Leuchte nach Anspruch 17 oder 18, **dadurch gekennzeichnet, daß** die Lichtauskoppeleinrichtung eine Prismenanordnung (111, 117) zum Auskoppeln von Licht aufweist, wobei der Prismenwinkel der Prismen hinsichtlich der lichtlenkenden Eigenschaften einem Prismenwinkel eines Prismas aus einem Material mit einem Brechungsindex von 1,49 zwischen 110° und 175° entspricht.

**20.** Leuchte nach einem der Ansprüche 17 bis 19, **dadurch gekennzeichnet, daß** eine der Lichtauskoppelfläche gegenüberliegende Dachfläche konkav ausgebildet ist.

**21.** Leuchte nach einem der Ansprüche 17 bis 20, **dadurch gekennzeichnet, daß** der Prismenwinkel einem Prismenwinkel eines Prismas aus einem Material mit einem Brechungsindex von 1,49 von mehr als 145° entspricht.

**22.** Leuchte nach einem der Ansprüche 1 bis 21, **dadurch gekennzeichnet, daß** eine der Lichtauskoppelfläche gegenüberliegende Dachfläche des Hohlraums (7) spiegelnd reflektierend ausgebildet ist.

**23.** Leuchte nach einem der Ansprüche 1 bis 22, **dadurch gekennzeichnet, daß** das Verhältnis der Breite des Hohlraums (7), bezogen auf eine Ebene senkrecht zu der Lampenachse, zu der Höhe des Hohlraums mehr als 3 beträgt.

## Claims

**1.** Luminaire, in particular interior luminaire with a light exit surface and one or more lamps (3; 101, 103), the light of which is emitted at least partially via said light exit surface, wherein the luminaire comprises a hollow optical waveguide (1; 107) having a cavity with reflective walls and a refractive light decoupling device (9; 111, 117), which decouples light incident at a light decoupling surface (15) of the cavity by light refraction from the hollow light guide (1; 107) to the light exit surface, wherein at least one lamp (3; 101, 103) radiates light into the hollow light guide at a side which is not parallel to the light decoupling surface, **characterized in that** the light intensity distribution curve of the light emitted via the light exit surface has, for a plane perpendicular to the light exit surface, one or more, mutually separate wing(s), which respectively lie(s) essentially in an angle range from 0° to 90°, relative to an axis perpendicular to the light exit surface through the light centre of the luminaire, and have(has) in each case a tip region and flank regions adjacent on both sides, in which the light intensity falls away to a significantly lower value than in the tip region, with the tip region being at angles of more than 0° and one of the flanks falling away towards the angle range around 0°, wherein one side of the cavity (11; 25; 37) opposite the lamp is in the form of a reflector, and the wall (11; 37) of the cavity opposite the lamp is inclined at an acute angle ($\alpha$) relative to the light decoupling surface.

**2.** Luminaire according to Claim 1, **characterized in that** the wings, relative to an axis perpendicular to the light exit surface through the light centre of the luminaire, are essentially symmetrical and lie in each case essentially in an angle range from 0° to 90°.

**3.** Luminaire according to Claim 1 or 2, **characterized in that** the light decoupling device has an arrangement of cross-sectionally symmetrical linear prisms (13; 119a, 119b, 121a, 121b).

**4.** Luminaire according to one of Claims 1 to 3, **characterized in that** the light emission at the light exit surface, relative to a plane perpendicular to the light exit surface, occurs at least predominantly into the spatial region which corresponds to an angle range from 0° to 90° with respect to an axis perpendicular to the light exit surface through the light centre of the luminaire.

5. Luminaire according to one of Claims 1 to 4, **characterized in that** the angle (α) lies in a range of less than 30°.

6. Luminaire according to one of Claims 1 to 5, **characterized in that** the hollow light guide has, in a cross section perpendicular to the lamp axis, a wedge-shape or the shape of a wedge cut off at the tip.

7. Luminaire according to one of Claims 1 to 6, **characterized in that** a maximum of the light intensity distribution curve is at an angle of more than 25°, relative to said axis perpendicular to the light exit surface.

8. Luminaire according to one of Claims 1 to 7, **characterized in that** the light decoupling device has an arrangement of prisms (13; 111, 117) for decoupling light, whose prism angle corresponds, with regard to the light-directing characteristics, to a prism angle of a prism made of a material having a refractive index of 1.49 of more than 110°.

9. Luminaire according to one of Claims 1 to 7, **characterized in that** the light decoupling device has an arrangement of prisms (13) for decoupling light, whose prism angle corresponds, with regard to the light-directing characteristics of the prisms, to a prism angle of a prism made of a material having a refractive index of 1.49 of from 110° to 128°.

10. Luminaire according to one of Claims 1 to 9, **characterized in that** the luminaire is in the form of a table luminaire whose light head has the light decoupling device (96), and the position of the main maximum of the light intensity distribution curve, relative to a vertical axis through the light centre of the luminaire, is between 40° and 80°.

11. Luminaire according to Claim 10, **characterized in that** the light decoupling device has an arrangement of prisms, whose prism angle corresponds, with regard to the light-directing characteristics, to a prism angle of a prism made of a material having a refractive index of 1.49 of from 130° to 175°.

12. Luminaire according to one of Claims 1 to 9, **characterized in that** the luminaire is in the form of a standard luminaire or wall luminaire.

13. Luminaire according to one of Claims 1 to 9, **characterized in that** it is in the form of a wall washer and has a maximum of the light intensity distribution curve between 5° and 40° with respect to said axis perpendicular to the light exit surface.

14. Luminaire according to Claim 13, **characterized in that** the light decoupling device has an arrangement of prisms, whose prism angle corresponds, with regard to the light-directing characteristics of the prisms, to a prism angle of a prism made of a material having a refractive index of 1.49 of from 55° to 80° or 145° to 175°.

15. Luminaire according to one of Claims 1 to 9, **characterized in that** it is in the form of a ceiling washer and has a maximum of the light intensity distribution curve between 40° and 85° or 5° to 50° with respect to said axis perpendicular to the light exit surface.

16. Luminaire according to Claim 15, **characterized in that** the light decoupling device has an arrangement of prisms, whose prism angle corresponds, with regard to the light-directing characteristics of the prisms, to a prism angle of a prism made of a material having a refractive index of 1.49 of from 145° to 175° or 55° to 80°.

17. Luminaire , in particular interior luminaire with a light exit surface and one or more lamps (3; 101, 103), the light of which is emitted at least partially via said light exit surface, wherein the luminaire comprises a hollow optical waveguide (1; 107) having a cavity with reflective walls and a refractive light decoupling device (9; 111, 117), which decouples light incident at a light decoupling surface (15) of the cavity by light refraction from the hollow light guide (1; 107) to the light exit surface, wherein at least one lamp (3; 101, 103) radiates light into the hollow light guide at a side which is not parallel to the light decoupling surface, **characterized in that** the light intensity distribution curve of the light emitted via the light exit surface has, for a plane perpendicular to the light exit surface, one or more, mutually separate wing(s), which respectively lie(s) essentially in an angle range from 0° to 90°, relative to an axis perpendicular to the light exit surface through the light centre of the luminaire, and have(has) in each case a tip region and flank regions adjacent on both sides, in which the light intensity falls away to a significantly lower value than in the tip region, with the tip region being at angles of more than 0° and one of the flanks falling away towards the angle range around 0°, wherein in each case one lamp (101, 103) is arranged on two mutually opposite sides of the hollow light guide (105) which are not parallel to the light decoupling surface, which lamp couples light into the hollow light guide (105), and **in that** the light intensity distribution curve is essentially symmetrical on a plane perpendicular to the light exit surface to an axis through the light centre of the luminaire, the two wings of the light intensity distribution curve on both sides of the axis of symmetry cover in each case an angle range of not more than 90° and the angle range around 0° separates the two wings from each other, wherein the height (h) of the cavity of the hollow light guide decreases at least in sections, starting from the two sides on which the lamps are arranged towards the middle of the cavity.

18. Luminaire according to Claim 17, **characterized in that** the two wings of the light intensity distribution curve have in each case a maximum, the maximum of each of the two wings being at an angle of more than 25° with respect to the axis of symmetry.

19. Luminaire according to Claim 17 or 18, **characterized in that** the light decoupling device has a prism arrangement (111, 117) for decoupling light, wherein the prism angle of the prisms corresponds, with regard to the light-directing characteristics, to a prism angle of a prism made of a material having a refractive index of 1.49 between 110° and 175°.

20. Luminaire according to one of Claims 17 to 19, **characterized in that** a roof surface opposite the light decoupling surface is concave.

21. Luminaire according to one of Claims 17 to 20, **characterized in that** the prism angle corresponds to a prism angle of a prism made of a material having a refractive index of 1.49 of greater than 145°.

22. Luminaire according to one of Claims 1 to 21, **characterized in that** a roof surface of the cavity (7) opposite the light decoupling surface is specularly reflective.

23. Luminaire according to one of Claims 1 to 22, **characterized in that** the ratio of the width of the cavity (7), relative to a plane perpendicular to the lamp axis, to the height of the cavity is greater than 3.

## Revendications

1. Luminaire, en particulier luminaire d'intérieur, comportant une surface de sortie de lumière et une ou une pluralité de lampes (3 ; 101, 103) dont la lumière est émise au moins partiellement sur ladite surface de sortie de lumière ce luminaire comprenant un conduit de lumière creux (1 ; 107) qui présente une cavité à parois réfléchissantes et un dispositif de découplage de lumière réfracteur (9 ; 111, 117) qui découple la lumière tombant sur une surface de découplage de lumière (15) de la cavité, par réfraction, du conduit de lumière creux (1 ; 107) à la surface de sortie de lumière, au moins une lampe (3 ; 101, 103) envoyant de la lumière dans le conduit de lumière creux sur un côté non parallèle à la surface de découplage de lumière, **caractérisé par le fait que** pour un plan perpendiculaire à la surface de sortie de lumière, la courbe de distribution de l'intensité lumineuse de la lumière émise sur la surface de sortie de lumière présente une aile ou plusieurs ailes séparées les unes des autres qui sont situées chacune sensiblement dans un domaine angulaire de 0° à 90° par rapport à un axe perpendiculaire à la surface de sortie de lumière et passant par le centre de gravité de la lumière du luminaire et présentent chacune une zone de pointe et des zones de flanc s'y joignant des deux côtés dans lesquelles l'intensité lumineuse tombe à une valeur nettement plus petite que dans la zone de pointe, la zone de pointe étant située à des angles supérieurs à 0° et un des flancs baissant vers le domaine angulaire situé autour de 0°, un côté de la cavité (11 ; 25 ; 37) situé à l'opposé de la lampe étant constitué d'un réflecteur , et la paroi (11 ; 37) de la cavité située à l'opposé de la lampe étant inclinée d'un angle aigu ($\alpha$) par rapport à la surface de découplage de lumière.

2. Luminaire selon la revendication 1, **caractérisé par le fait que** les ailes sont situées sensiblement symétriquement par rapport à un axe perpendiculaire à la surface de sortie de lumière et passant par le centre de gravité de la lumière du luminaire et sont situées chacune sensiblement dans un domaine angulaire de 0° à 90°.

3. Luminaire selon l'une des revendications 1 ou 2, **caractérisé par le fait que** le dispositif de découplage de lumière présente un système de prismes rectilignes de section symétrique (13 ; 119a, 119b, 121a, 121b).

4. Luminaire selon l'une des revendications 1 à 3, **caractérisé par le fait que** l'émission de lumière sur la surface de sortie de lumière a lieu, par rapport à un plan perpendiculaire à la surface de sortie de lumière, au moins en majorité dans une domaine spatial qui correspond à un domaine angulaire de 0° à 90° par rapport à un axe perpendiculaire à la surface de sortie de lumière et passant par le centre de gravité de la lumière du luminaire.

5. Luminaire selon l'une des revendications 1 à 4, **caractérisé par le fait que** l'angle (α) est situé dans un domaine de moins de 30°.

6. Luminaire selon l'une des revendications 1 à 5, **caractérisé par le fait que** le conduit de lumière creux présente, dans une section perpendiculaire à l'axe de la lampe, une forme de coin ou celle d'un coin découpé à la pointe.

7. Luminaire selon l'une des revendications 1 à 6, **caractérisé par le fait qu'**un maximum de la courbe de distribution de l'intensité lumineuse est situé à un angle de plus de 25° par rapport audit axe perpendiculaire à la surface de sortie de lumière.

8. Luminaire selon l'une des revendications 1 à 7, **caractérisé par le fait que** le dispositif de découplage de lumière présente un système de prismes (13 ; 111, 117) pour le découplage de la lumière dans lequel l'angle des prismes correspond en ce qui concerne les propriétés de déviation de la lumière à un angle de plus de 110° d'un prisme d'une matière ayant un indice de réfraction de 1,49.

9. Luminaire selon l'une des revendications 1 à 7, **caractérisé par le fait que** le dispositif de découplage de lumière présente un système de prismes (13) pour le découplage de la lumière dans lequel l'angle des prismes correspond en ce qui concerne les propriétés de déviation de la lumière des prismes à un angle de 110° à 128° d'un prisme d'une matière ayant un indice de réfraction de 1,49.

10. Luminaire selon l'une des revendications 1 à 9, **caractérisé par le fait que** le luminaire se présente sous la forme d'un luminaire de table dont la tête lumineuse présente le dispositif de découplage de lumière (96), et la position du maximum principal de la courbe de distribution de l'intensité lumineuse, par rapport à un axe vertical passant par le centre de gravité de la lumière du luminaire, est située entre 40° et 80°.

11. Luminaire selon la revendication 10, **caractérisé par le fait que** le dispositif de découplage de lumière présente un système de prismes dans lequel l'angle des prismes correspond en ce qui concerne les propriétés de déviation de la lumière à un angle de 130° à 175° d'un prisme d'une matière ayant un indice de réfraction de 1,49.

12. Luminaire selon l'une des revendications 1 à 9, **caractérisé par le fait que** le luminaire se présente sous la forme d'un lampadaire ou d'un luminaire mural.

13. Luminaire selon l'une des revendications 1 à 9, **caractérisé par le fait que** le luminaire se présente sous la forme d'un wall-washer, ou lèche-mur, et qu'il présente un maximum de la courbe de distribution de l'intensité lumineuse situé entre 5° et 40° par rapport audit axe perpendiculaire à la surface de sortie de lumière.

14. Luminaire selon la revendication 13, **caractérisé par le fait que** le dispositif de découplage de lumière présente un système de prismes dans lequel l'angle des prismes correspond en ce qui concerne les propriétés de déviation de la lumière des prismes à un angle de 55° à 80° ou de 145° à 175° d'un prisme d'une matière ayant un indice de réfraction de 1,49.

15. Luminaire selon l'une des revendications 1 à 9, **caractérisé par le fait que** le luminaire se présente sous la forme d'un ceiling-washer, ou lèche-plafond, et qu'il présente un maximum de la courbe de distribution de l'intensité lumineuse situé entre 40° et 85° ou entre 5° et 50° par rapport audit axe perpendiculaire à la surface de sortie de lumière.

16. Luminaire selon la revendication 15, **caractérisé par le fait que** le dispositif de découplage de lumière présente un système de prismes dans lequel l'angle des prismes correspond en ce qui concerne les propriétés de déviation de la lumière des prismes à un angle de 145° à 175° ou de 55° à 80° d'un prisme d'une matière ayant un indice de réfraction de 1,49.

17. Luminaire, en particulier luminaire d'intérieur, comportant une surface de sortie de lumière et une ou une pluralité de lampes (3 ; 101, 103) dont la lumière est émise au moins partiellement sur ladite surface de sortie de lumière ce luminaire comprenant un conduit de lumière creux (1 ; 107) qui présente une cavité à parois réfléchissantes et un dispositif de découplage de lumière réfracteur (9 ; 111, 117) qui découple la lumière tombant sur une surface de découplage de lumière (15) de la cavité, par réfraction, du conduit de lumière creux (1 ; 107) à la surface de sortie de lumière, au moins une lampe (3 ; 101, 103) envoyant de la lumière dans le conduit de lumière creux sur un côté non parallèle à la surface de découplage de lumière, **caractérisé par le fait que** pour un plan perpendiculaire à la surface de sortie de lumière, la courbe de distribution de l'intensité lumineuse de la lumière émise sur la surface de sortie de lumière présente une aile ou plusieurs ailes séparées les unes des autres qui sont situées chacune sensiblement dans un domaine angulaire de 0° à 90° par rapport à un axe perpendiculaire à la surface de sortie de lumière et passant par le centre de gravité de la lumière du luminaire et présentent chacune une zone de pointe et des zones de flanc s'y joignant des deux côtés dans lesquelles l'intensité lumineuse tombe à une valeur nettement plus petite que dans la zone de pointe, la zone de pointe étant située à des angles supérieurs à 0° et un des flancs baissant vers le domaine angulaire situé autour de 0°, une lampe (101, 103) étant placée sur chacun de deux côtés opposés du conduit de lumière creux (105) qui ne sont pas parallèles à la surface de découplage de lumière , cette lampe envoyant de la lumière dans le conduit de lumière creux (105), et que la courbe de distribution de l'intensité lumineuse dans un plan perpendiculaire à la surface de sortie de lumière est sensiblement symétrique par rapport à un axe passant par le centre de gravité de la lumière du luminaire, et les deux ailes de la courbe de distribution de l'intensité lumineuse, de part et d'autre de l'axe de symétrie, couvrent chacune un domaine angulaire d'au plus 90° et le domaine angulaire situé autour de 0° sépare les deux ailes l'une de l'autre, la hauteur (h) de la cavité du conduit de lumière creux diminuant au moins par sections à partir des deux côtés sur lesquels sont placées les lampes vers le milieu de la cavité.

**18.** Luminaire selon la revendication 17, **caractérisé par le fait que** les deux ailes de la courbe de distribution de l'intensité lumineuse présentent chacune un maximum, le maximum de chacune des deux ailes étant situé à un angle supérieur à 25° par rapport à l'axe de symétrie.

**19.** Luminaire selon l'une des revendications 17 ou 18, **caractérisé par le fait que** le dispositif de découplage de lumière présente un système de prismes (111, 117) pour le découplage de la lumière, l'angle des prismes correspondant en ce qui concerne les propriétés de déviation de la lumière à un angle compris entre 110° et 175° d'un prisme d'une matière ayant un indice de réfraction de 1,49.

**20.** Luminaire selon l'une des revendications 17 à 19, **caractérisé par le fait qu'**une surface de toit opposée à la surface de découplage de lumière est concave.

**21.** Luminaire selon l'une des revendications 17 à 20, **caractérisé par le fait que** l'angle des prismes correspond à un angle supérieur à 145° d'un prisme d'une matière ayant un indice de réfraction de 1,49.

**22.** Luminaire selon l'une des revendications 1 à 21, **caractérisé par le fait qu'**une surface de toit de la cavité (7) opposée à la surface de découplage de lumière produit une réflexion spéculaire.

**23.** Luminaire selon l'une des revendications 1 à 22, **caractérisé par le fait que** le rapport de la largeur de la cavité (7), relativement à un plan perpendiculaire à l'axe de la lampe, à la hauteur de la cavité est supérieur à 3.

## Fig. 1

B

1

11  7

3

5

α

h

S1

9

C

W

S2

13  15

## Fig. 4

B

11'  7'

5

3

h

15

17  9  13

## Fig. 5

21  23

3

25

5

α

15

9

## Fig. 2a

## Fig. 2b

# Fig. 2c

# Fig. 3

## Fig.6

31 33 35

α 37 5

15

9 3

## Fig.7

B

41

3

h

α 5

9 15

## Fig.16

105

101 109 107 115

103

117 h

113 111 B

## Fig. 8

## Fig. 9

## Fig. 10

## Fig. 11.

Fig.12

52

58          56
h

B    50        α

60        62

54

Fig.12a

0°    20°

82

Fig. 13

84

Fig.13a

120°

90°

0°

78

74

h

76

80

72

B

Fig. 14

Fig. 14a

# Fig. 15

**Fig. 17**

**Fig. 18a**

**Fig. 18b**

**Fig. 18c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS5863114 A
- US PS5396350 A
- US PS5555109 A